# EUROPÄISCHE PATENTSCHRIFT

(11) **EP 2 987 670 B1**
(45) Veröffentlichungstag und Bekanntmachung des Hinweises auf die Patenterteilung: **20.09.2017**
(21) Anmeldenummer: 15001616.0
(22) Anmeldetag: 29.05.2015
(51) Int. Cl.: B60K 11/08, B60H 1/00, B60H 1/34

(54) **VORRICHTUNG ZUR ABSTIMMUNG EINES LUFTDURCHSATZES**
APPARATUS FOR TUNING AN AIR FLOW
DISPOSITIF DE DETERMINATION D'UN DEBIT D'AIR

(30) Priorität: 19.08.2014 DE 102014012248
(43) Veröffentlichungstag der Anmeldung: 24.02.2016
(73) Patentinhaber: AUDI AG, 85045 Ingolstadt (DE)
(72) Erfinder: Herbig, Mike, 92339 Beilngries (DE); Pickl, Richard, 85095 Denkendorf (DE)

(56) Entgegenhaltungen:
- DE-U1-202011 050 032
- GB-A- 2 376 067
- US-A1- 2013 241 231

## Beschreibung

Die Erfindung betrifft eine Vorrichtung zur Abstimmung eines Luftdurchsatzes gemäß dem Oberbegriff des Patentanspruchs 1.

Vorrichtungen zur Abstimmung eines Luftdurchsatzes sind in zahlreichen Variationen bekannt. Üblicherweise umfassen diese Vorrichtungen mindestens eine Durchlassöffnung, welche in einem Fahrzeugfrontbereich angeordnet und mit jeweils einem korrespondierenden Luftschacht gekoppelt ist. Durch die Durchlassöffnung wird eine vom Fahrtwind bewirkte Luftströmung kanalisiert und gerichtet und beispielsweise zu einem Wärmetauscher oder einem Fahrzeugaggregat geleitet. Der Wärmetauscher kann hierbei als Luft-Kühlmittel-Wärmetauscher für ein Antriebsaggregat und/oder als Ölkühler und/oder als Luft-Kältemittel-Wärmetauscher für eine Klimaanlage ausgeführt werden. Somit kann die Luftströmung ein Fahrzeugaggregat direkt oder über einen korrespondierenden Wärmetauscher kühlen. Das Eintreten der Luftströmung in die mindestens eine im Fahrzeugfrontbereich angeordnete Durchlassöffnung kann zu einer so genannten "Verblockung" führen, wodurch der Luftwiderstand des Fahrzeugs erhöht werden kann. Durch die Erhöhung des Luftwiderstandes kann sich der Kraftstoffverbrauch erhöhen. Üblicherweise kann die mindestens eine Durchlassöffnung einen verschlossenen oder einen freigegebenen Zustand aufweisen. Im geschlossenen Zustand kann keine Luftströmung zum Kühlen in den Fahrzeuginnenbereich gelangen und das Fahrzeug weist einen kleineren Luftwiderstand als im freigegebenen Zustand auf. Im freigegebenen Zustand kann die Luftströmung zum Kühlen in den Fahrzeuginnenbereich gelangen, wobei jedoch der Luftwiderstand des Fahrzeugs erhöht wird. Die Durchlassöffnung kann hierbei beispielsweise durch schwenkbare Lamellen freigegeben und verschlossen werden.

Aus der DE 10 2009 058 284 A1 ist ein Vorderbau für ein Fahrzeug mit mindestens einer Öffnung zum durchlassen von Fahrtwind insbesondere als Kühlluft beispielsweise zur Anströmung eines Ladeluftkühlers bekannt. Die mindestens eine Durchlassöffnung ist hierbei zumindest teilweise von einem Nummernschild des Fahrzeugs und/oder von einem Träger des Nummernschilds abdeckbar, wobei durch das Abdecken der mindestens einen Durchlassöffnung die Aerodynamik des Fahrzeugs verbessert werden kann. Das Nummernschild ist zu diesem Zweck zwischen einer die Öffnung verdeckenden ersten Stellung und einer die Öffnung freigebenden zweiten Stellung verschiebbar.

Aus der DE 10 2004 026 419 A1 ist eine gattungsgemäße Vorrichtung zur Abstimmung eines Luftdurchsatzes durch im Frontbereich vorgesehene Durchlassöffnungen bekannt. Über eine Veränderung von Durchgangsquerschnitten der Durchlassöffnungen kann beispielsweise eine Luftströmung zu einem Motorraum eingestellt werden. Die beschriebene Vorrichtung weist mindestens zwei Durchlassöffnungen auf, eine obere erste Durchlassöffnung und eine untere zweite Durchlassöffnung. Die erste Durchlässöffnung ist einer oberen Luftabgriffszone zugeordnet und mit einem ersten korrespondierenden Luftschacht gekoppelt. Die zweite Durchlassöffnung ist einer in vertikaler Richtung tieferliegenden unteren Luftabgriffszone zugeordnet und mit einem zweiten korrespondierenden Luftschacht gekoppelt. Zur Abstimmung eines den ersten Luftschacht durchsetzenden Luftstroms und zur Abstimmung eines den zweiten Luftschacht durchsetzenden Luftstroms sind im Bereich der ersten Durchlassöffnung und der zweiten Durchlassöffnung schwenkbare Lamellen angeordnet, welche unter Berücksichtigung des Fahrzeugbetriebszustandes die korrespondierenden Durchgangsquerschnitte der Durchlassöffnungen verändern.

Aus der GB 2 376 067 A ist eine Vorrichtung zur Abstimmung eines Luftdurchsatzes mit einem Grundkörper und mehreren verschließbaren oder freigebbaren Durchlassöffnungen bekannt, welche jeweils mit einem korrespondierenden Luftschacht gekoppelt sind und die Luftzufuhr in verschiedene Bereiche eines Fahrzeuginnenraums einstellen. Ein linear verschiebbares Element mit einem Fenster wird von einem Antrieb bewegt und deckt je nach Position bzw. Stellung des Fensters alle Luftschächte ab oder gibt einen oder mehrere Luftschächte zumindest teilweise frei.

Aus der US 2013/241231 A1 ist eine Vorrichtung zur Abstimmung eines Luftdurchsatzes mit den Merkmalen des Oberbegriffs des Anspruchs 1 und zwar mit einem Grundkörper und mehreren verschließbaren oder freigebbaren Durchlass nungen bekannt, welche in einem Fahrzeugfrontbereich angeordnet und mit jeweils einem korrespondierendem Luftschacht gekoppelt sind. Ein erstes Stellelement ist als linear verschiebbare Klappe ausgeführt, wobei je nach Position bzw. Stellung des ersten Stellelements alle Luftschächte abgedeckt oder einer nach dem anderen freigegeben werden kann.

Die Aufgabe der Erfindung ist es, eine Vorrichtung zur Abstimmung eines Luftdurchsatzes zu schaffen, welche sowohl aerodynamische als auch thermische Anforderungen eines Fahrzeugs zuverlässig erfüllt und einfach aufgebaut ist.

Erfindungsgemäß wird die Aufgabe durch Bereitstellung einer Vorrichtung zur Abstimmung eines Luftdurchsatzes mit den Merkmalen des Patentanspruchs 1 gelöst. Vorteilhafte Ausführungsformen und Weiterbildungen der Erfindung sind in den abhängigen Ansprüchen angegeben.

Um eine Vorrichtung zur Abstimmung eines Luftdurchsatzes zu schaffen, welche sowohl aerodynamische als auch thermische Anforderungen eines Fahrzeugs zuverlässig erfüllt und einfach aufgebaut ist, ist ein erstes Stellelement als linear verschiebbare Klappe ausgeführt, welche in einer ersten Stellung mindestens zwei Durchlassöffnungen verschließt, in einer zweiten Stellung eine erste Durchlassöffnung freigibt und eine zweite Durchlassöffnung verschließt und in einer dritten Stellung beide Durchlassöffnungen freigibt. Erfindungsgemäß bildet ein zweites Stellelement eine Finne aus, wenn das erste Stellelement in der zweiten oder dritten Position angeordnet ist. Die Finne wird durch Falten und/oder Knicken des zweiten Stellelements ausgebildet. In vorteilhafter Weise kann die Finne eine Luftstromführung ausbilden, welche bei Bedarf aktivierbar ist. Die Finne kann in vorteilhafter Weise ein separates oder festes Luftleitelement ersetzten, wodurch die Entstehung weiterer Luftreibung zumindest teilweise verhindert werden kann.

Unter aerodynamischen Anforderungen wird im Folgenden verstanden, dass das Fahrzeug einen möglichst geringen Luftwiderstand aufweist. Da das Eintreten einer Luftströmung, welche insbesondere aus dem Fahrtwind resultiert, in die mindestens eine in einem Fahrzeugfrontbereich angeordnete Durchlassöffnung zu einer sogenannten "Verblockung" und dadurch zur Erhöhung des Luftwiderstandes führen kann, ist es aus aerodynamischen Sicht sinnvoll die Durchlassöffnungen zu schließen.

Unter thermischen Anforderungen werden im Folgenden das Kühlen einer Fahrgastzelle und/oder das Kühlen von mindestens einem Fahrzeugaggregat verstanden. Aus thermischer Sicht ist es sinnvoll, möglichst viele Durchlassöffnungen an der Fahrzeugfront anzuordnen und diese freizugeben.

In vorteilhafter Weise können die mindestens zwei Durchlassöffnungen der erfindungsgemäßen Vorrichtung zur Abstimmung eines Luftdurchsatzes bei Bedarf freigegeben werden, so dass die thermischen Anforderungen erfüllt werden können. Des Weiteren ist das erste Stellelement in vorteilhafter Weise als linear verschiebbare Klappe ausgeführt, so dass die mindestens zwei Durchlassöffnungen in einem Seitenbereich der Fahrzeugfront angeordnet werden können. Die mindestens zwei Durchlassöffnungen sind jeweils mit einem korrespondierenden Luftschacht verbunden. In vorteilhafter Weise kann ein mit der ersten Durchlassöffnung gekoppelter erster Luftschacht mit einem Wärmetauscher für eine Klimaanlage zur Temperierung des Fahrzeugsinnenraums gekoppelt werden. Die zweite Durchlassöffnung kann mit einem zweiten Luftschacht gekoppelt werden, welcher beispielsweise mit einem Wärmetauscher zum Kühlen von Fahrzeugaggregaten und/oder direkt mit einem zu kühlenden Fahrzeugaggregat gekoppelt werden kann. In vorteilhafter Weise kann die erfindungsgemäße Vorrichtung zur Abstimmung eines Luftdurchsatzes in Stufen arbeiten und bei Bedarf nur einen Luftschacht oder mehrere Luftschächte mit dem kühlenden Luftstrom versorgen. Dadurch kann in vorteilhafter Weise eine Kühllufteinströmung optimiert werden. In vorteilhafter Weise können weitere Durchlassöffnungen und korrespondierende Luftschächte vorgesehen werden, welche mit weiteren Wärmetauschern bzw. zu kühlenden Fahrzeugaggregaten gekoppelt sind. Die Klappe kann hierbei in weitere Stellungen verschoben werden oder in der zweiten Stellung zwei Öffnungen freigeben und weitere Öffnungen verschließen. Des Weiteren kann eine Funktionstüchtigkeit der Vorrichtung einfach durch Besichtigung überprüft werden, da das Verschieben der Klappe von außen sichtbar ist.

In vorteilhafter Ausgestaltung der erfindungsgemäßen Vorrichtung kann das erste Stellelement in Fahrzeugquerrichtung horizontal verschiebbar gelagert werden und die mindestens zwei Durchlassöffnungen können in Fahrzeugquerrichtung nebeneinander angeordnet werden. In vorteilhafter Weise können die Durchlassöffnungen durch das seitliche Verschieben mit einem geringeren Luftwiderstand geöffnet und freigegeben werden.

In weiterer vorteilhafter Ausgestaltung der erfindungsgemäßen Vorrichtung kann der Grundkörper mindestens eine Kulissenführung aufweisen, welche das erste Stellelement führt. Beispielsweise kann die mindestens eine Kulissenführung in einer bevorzugten Ausführungsform zumindest teilweise hinter dem zweiten Stellelement verlaufen. Eine Fahrzeugfront weist hierbei einen der auf das Fahrzeug wirkenden Luftströmung zugewandten vorderen Bereich und einen dem Fahrzeuginnenraum zugewandten hinteren Bereich auf. In vorteilhafter Weise ist das erste Stellelement in der zweiten Stellung und in der dritten Stellung zumindest teilweise im hinteren Bereich angeordnet und kann von dem zweiten Stellelement vor äußeren Einflüssen geschützt werden. Zudem können durch die Anordnung des zweiten Stellelements im hinteren Bereich, die Entstehung weiterer Luftreibungseffekten durch das erste Stellelement in der zweiten Stellung und in der dritten Stellung zumindest teilweise verhindert werden. Des Weiteren kann das erste Stellelement in der ersten Stellung fluchtend an einer Außenhaut der Fahrzeugfront anschließen, so dass in der ersten Stellung Luftreibungseffekte zumindest reduziert werden können.

In weiterer vorteilhafter Ausgestaltung der erfindungsgemäßen Vorrichtung kann der Grundköper eine Aufnahme für einen Antrieb aufweisen. Hierbei kann der Antrieb mit dem ersten Stellelement und/oder mit dem zweiten Stellelement gekoppelt werden. Beispielsweise kann der Antrieb als Elektromotor ausgeführt werden, welcher über einen Aktuator mit dem ersten Stellelement und/oder dem zweiten Stellelement gekoppelt werden kann. Zudem kann der Antrieb in vorteilhafter Weise mit einer Auswerte- und Steuereinheit verbunden werden, welche Sensordaten empfängt und auswertet und daraus beispielsweise die aktuelle Temperatur des mindestens einen Fahrzeugaggregats und/oder der Fahrgastzelle ermittelt. Zudem kann die Auswerte- und Steuereinheit Sensordaten empfangen und auswerten, um die aktuelle Fahrzeuggeschwindigkeit zu ermitteln. In Abhängigkeit der ermittelten Daten kann die Auswerte und Steuereinheit den Antrieb aktivieren und die Durchlassöffnungen öffnen oder schließen.

In weiterer vorteilhafter Ausgestaltung der erfindungsgemäßen Vorrichtung kann der Grundkörper erste Elemente einer Rastverbindung aufweisen, welche mit karosserieseitig angeordneten zweiten Elementen der Rastverbindung zusammenwirken und den Grundkörper an der Fahrzeugfront festlegen. In vorteilhafter Weise kann der Grundkörper durch die Rastverbindung einfach, beispielsweise an einem Stoßfänger befestigt werden.

In weiterer vorteilhafter Ausgestaltung der erfindungsgemäßen Vorrichtung können das erste Stellelement und das zweite Stellelement in der ersten Stellung an der Fahrzeugfront anliegen und einen geringen Luftwiderstand erzeugen. In vorteilhafter Weise kann ein Luftwiderstand durch die geschlossene flächige Außenhaut des Fahrzeugs in der ersten Stellung möglichst gering gehalten werden.

Eine vorteilhafte Ausführungsform der Erfindung ist in der Zeichnung dargestellt und wird nachfolgend beschrieben. In den Zeichnungen bezeichnen gleiche Bezugszeichen Komponenten bzw. Elemente, die gleiche bzw. analoge Funktionen ausführen.

Dabei zeigen:
- Fig. 1: eine schematische perspektivische Darstellung eines Ausführungsbeispiels einer erfindungsgemäßen Vorrichtung zur Abstimmung eines Luftdurchsatzes in einer ersten Stellung,
- Fig. 2: eine schematische perspektivische Darstellung der Vorrichtung zur Abstimmung des Luftdurchsatzes aus Fig. 1 in einer zweiten Stellung,
- Fig. 3: eine schematische perspektivische Darstellung der Vorrichtung zur Abstimmung des Luftdurchsatzes aus Fig. 1 und 2 in einer dritten Stellung,
- Fig. 4: eine schematische perspektivische Ansicht der Vorrichtung zur Abstimmung des Luftdurchsatzes aus Fig. 1 bis 3 in der ersten Stellung von hinten, und
- Fig. 5: eine schematische Teilschnittdarstellung der Vorrichtung zur Abstimmung des Luftdurchsatzes aus Fig. 4 in der ersten Stellung.

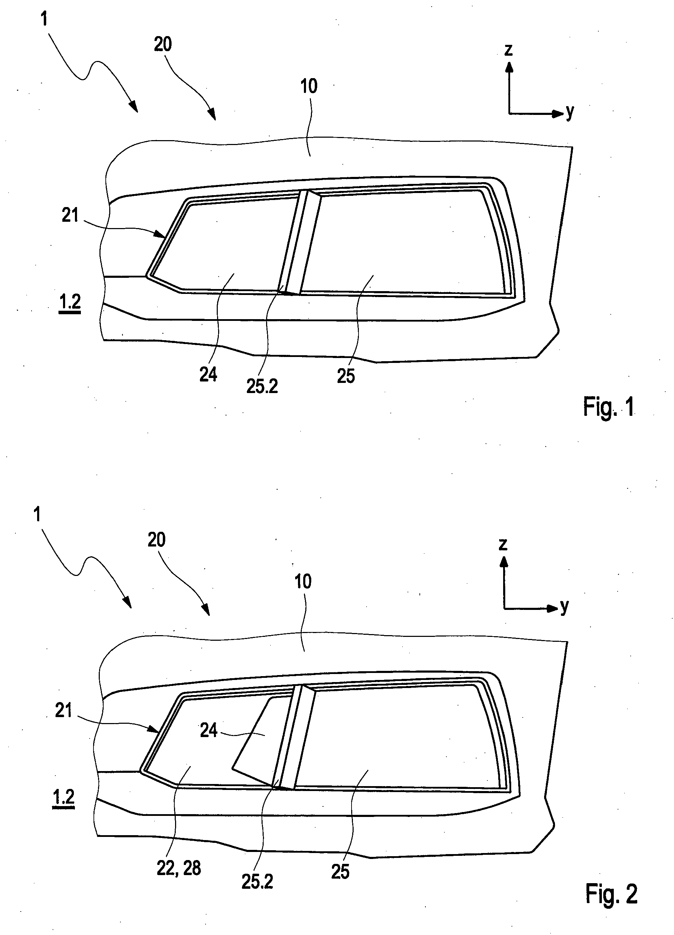

Wie aus Fig. 1 bis 5 ersichtlich ist, weist eine Vorrichtung 20 zur Abstimmung eines Luftdurchsatzes einen Grundkörper 21 und mindestens zwei verschließbare oder freigebbare Durchlassöffnungen 22, 23 auf. Die Durchlassöffnungen 22, 23 sind in einem Fahrzeugfrontbereich 1 angeordnet und mit jeweils einem korrespondierenden Luftschacht 28, 29 gekoppelt. Die Vorrichtung kann beispielsweise an einem Stoßfänger 10 angeordnet werden, wobei der Stoßfänger 10 einen einer auf ein Fahrzeug wirkenden Luftströmung zugewandten vorderen Bereich 1.2 und einen dem Fahrzeuginnenraum zugewandten hinteren Bereich 1.4 aufweist.

Erfindungsgemäß ist ein erstes Stellelement 24 als linear verschiebbare Klappe 24 ausgeführt, welche in einer ersten Stellung die mindestens zwei Durchlassöffnungen 22, 23 verschließt, in einer zweiter Stellung eine erste Durchlassöffnung 22 freigibt und eine zweite Durchlassöffnung 23 verschließt und in einer dritten Stellung beide Durchlassöffnungen 22, 23 freigibt.

Wie aus Fig. 1 bis 5 weiter ersichtlich ist, weist der Grundkörper 21 Aussparungen auf, welche die Durchlassöffnungen 22, 23 ausbilden. Die Durchlassöffnungen 22, 23 werden auf die korrespondierenden Luftschächte 28, 29 mit korrespondierenden Einlassöffnungen aufgesetzt. Hierbei bildet der Grundkörper 12 einen Rahmen um die Durchlassöffnungen 22, 23 aus. Die mindestens zwei Durchlassöffnungen 22, 23 können hierbei in einem Seitenbereich der Fahrzeugfront 1 oder mittig an der Fahrzeugfront 1 angeordnet werden.

Wie aus Fig. 1 bis 5 weiter ersichtlich ist, wird durch die Durchlassöffnungen 22, 23 die vom Fahrtwind bewirkte Luftströmung kanalisiert und gerichtet und beispielsweise zu einem nicht näher dargestellten Wärmetauscher geleitet. Der Wärmetauscher kann hierbei als Luft-Kühlmittel-Wärmetauscher für ein Antriebsaggregat und/oder als Ölkühler und/oder als Ladeluftkühler und/oder als Luft-Kältemittel-Wärmetauscher für eine Klimaanlage ausgeführt werden. Somit kann die erfindungsgemäße Vorrichtung 20 zur Abstimmung des Luftdurchsatzes beispielsweise zur direkten oder indirekten Kühlung über einen korrespondierenden Wärmetauscher von Fahrzeugaggregaten, wie beispielsweise einem Antriebsaggregat und/oder einem Bremsaggregat, oder einer Fahrgastzelle eingesetzt werden.

Wie aus Fig. 1 bis 5 weiter ersichtlich ist, weist das dargestellte Ausführungsbeispiel der erfindungsgemäßen Vorrichtung 20 zur Abstimmung des Luftdurchsatzes zwei Durchlassöffnungen 22, 23 auf, welche jeweils mit einem Luftschacht 28, 29 gekoppelt sind. Die zwei Durchlassöffnungen 22, 23 werden zur Abstimmung eines Luftdurchsatzes bei Bedarf von dem ersten Stellelement 24 freigegeben. Ein mit der ersten Durchlassöffnung 22 gekoppelter erster Luftschacht 28 kann beispielsweise mit dem Wärmetauscher einer Klimaanlage zur Regulierung der Temperatur des Fahrzeugsinnenraums gekoppelt werden. Die zweite Durchlassöffnung 23 kann mit einem zweiten Luftschacht 29 gekoppelt werden, welcher beispielsweise mit einem Wärmetauscher, wie beispielsweise einem Ladluftkühler oder einem Ölkühler, zum Kühlen von Antriebsaggregaten und/oder zum Kühlen von Bremsaggregaten gekoppelt werden. Die erfindungsgemäße Vorrichtung 20 zur Abstimmung eines Luftdurchsatzes arbeitet hierbei in Stufen und versorgt bei Bedarf nur einen Luftschacht 28 oder mehrere Luftschächte 28, 29 mit dem kühlenden Luftstrom. Dadurch wird eine Kühllufteinströmung in vorteilhafter Weise optimiert. Hierbei wird neben der Abstimmung des Luftdurchsatzes und der Optimierung der Kühllufteinströmung auch ein Luftwiderstand des Fahrzeugs optimiert. Bei geschlossenen Durchlassöffnungen 28, 29 ist Luftwiderstand minimal.

In einem alternativen nicht dargestellten Ausführungsbeispiel kann die erfindungsgemäße Vorrichtung 20 zur Abstimmung eines Luftdurchsatzes um weitere Durchlassöffnungen 22, 23 und Stellungen des ersten Stellelements 24 erweitert werden. Beispielsweise kann die erfindungsgemäßen Vorrichtung 20 zur Abstimmung eines Luftdurchsatzes in einem nicht dargestellten alternativen Ausführungsbeispiel drei Durchlassöffnungen 22, 23 aufweisen. In der ersten Stellung verschließt das erste Stellelement 24 alle drei Durchlassöffnungen 22, 23. In einer zweiten Stellung gibt das erste Stellelement 24 die erste Durchlassöffnung 22 frei und verschließt die zweite Durchlassöffnung 23 und eine dritte Durchlassöffnung. In einer dritten Stellung gibt das erste Stellelement 24 die erste Durchlassöffnung 22 und die zweite Durchlassöffnung 23 frei und verschließt die dritte Durchlassöffnung. In einer vierten Stellung gibt das erste Stellelement 24 alle Durchlassöffnungen 22, 23 frei. Selbstverständlich können auch andere Öffnungskombinationen der drei Durchlassöffnungen umgesetzt werden, so kann beispielsweise alternativ das erste Stellelement in einer zweiten Stellung die erste Durchlassöffnung und die zweite Durchlassöffnung freigeben und lediglich die dritte Durchlassöffnung verschließen usw.

Wie aus Fig. 1 bis 5 weiter ersichtlich ist, ist das erste Stellelement 24 in Fahrzeugquerrichtung y horizontal verschiebbar gelagert und die mindestens zwei Durchlassöffnungen 22, 23 sind in Fahrzeugquerrichtung y nebeneinander angeordnet. Dadurch können die Durchlassöffnungen 22, 23 durch seitliches Verschieben des ersten Stellelements 24 mit einem geringerem Luftwiderstand geöffnet und freigegeben werden. In einer alternativen nicht dargestellten Ausführung, kann das erste Stellelement 24 in Fahrzeughochrichtung z vertikal verschiebbar gelagert und die mindestens zwei Durchlassöffnungen 22, 23 in Fahrzeughochrichtung z übereinander angeordnet werden.

Wie aus Fig. 1 bis 5 weiter ersichtlich ist, ist bildet ein zweites Stellelement 25 eine Finne 25.2 aus, wenn das erste Stellelement 24 in der zweiten oder dritten Position angeordnet ist. In einem, bevorzugten Ausführungsbeispiel ist die Finne 25.2 durch Falten und/oder Knicken des zweiten Stellelements 25 ausbildbar. Die Finne 25.2 bildet auf der dem wirkenden Luftströmung zugewandten vorderen Bereich 1.2 eine Luftstromführung aus, welche bei Bedarf aktivierbar ist. Die. Finne 25.2 kann hierbei ein separates oder festes Luftleitelement ersetzten, wodurch die Entstehung weiterer Luftreibungseffekte zumindest reduziert werden kann.

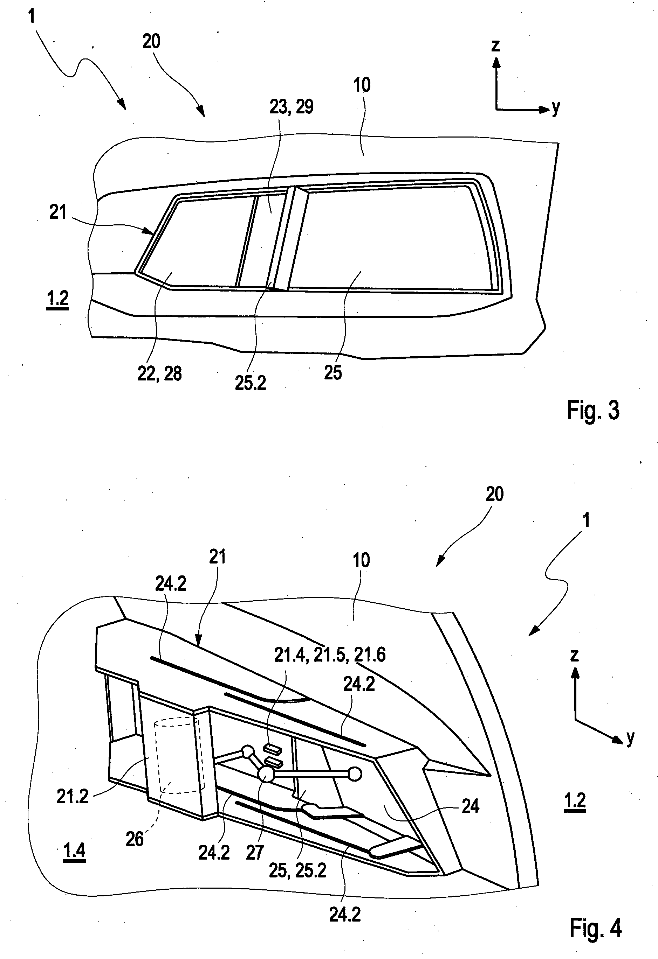

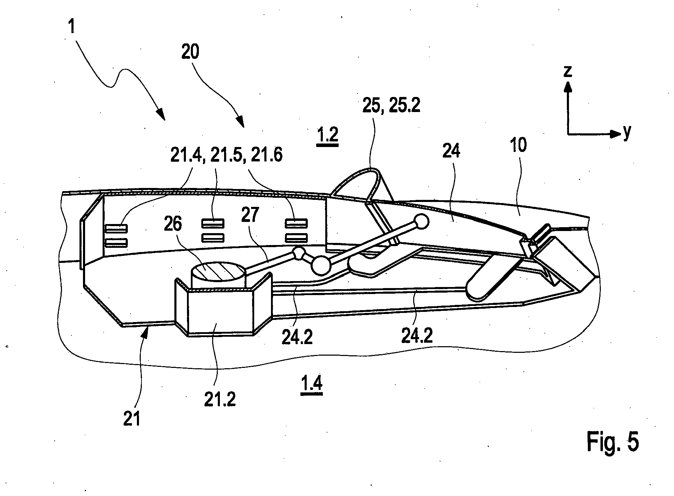

Wie aus Fig. 4 und 5 weiter ersichtlich ist, weist der Grundkörper 21 mindestens eine Kulissenführung 24.2 auf, welche das erste Stellelement 24 führt. Die mindestens eine Kulissenführung 24.2 verläuft zumindest teilweise hinter dem zweiten Stellelement 25. Im dargestellten Ausführungsbeispiel weist der Grundkörper 21 vier Kulissenführungen 24.2 auf, welche im dem Fahrzeuginnenraum zugewandten hinteren Bereich 1.4 verlaufen. Hierbei sind jeweils zwei Kulissenführungen 24.2 in zwei einander gegenüberliegenden Wänden des Grundkörpers 21 eingebracht sind. Das erste Stellelement 24 ist über entsprechende Nasen in den Kulissenführungen 24.2 geführt.

Wie aus Fig. 4 und 5 weiter ersichtlich ist, weist der Grundköper 21 eine Aufnahme 21.2 für einen Antrieb 26 auf. Der Antrieb 26 ist hierbei im dem Fahrzeuginnenraum zugewandten hinteren Bereich 1.4 angeordnet. Zudem ist der Antrieb 26 mit dem ersten Stellelement 24 und/oder mit dem zweiten Stellelement 25 gekoppelt. Im dargestellten Ausführungsbeispiel ist der Antrieb 26 als Elektromotor ausgeführt, welcher über einen Aktuator 27 mit dem ersten Stellelement 24 gekoppelt ist. Im dargestellten Ausführungsbeispiel ist der Aktuator als Gelenkarm ausgeführt. Alternativ kann der Antrieb 26 auch mit dem zweiten Stellelement 25 gekoppelt werden. Alternativ kann ein zweiter Antrieb mit dem zweiten Stellelement 25 gekoppelt werden. Zudem kann der Antrieb 26 mit einer nicht dargestellten Auswerte- und Steuereinheit verbunden werden, welche Sensordaten empfängt und auswertet und daraus beispielsweise die aktuelle Temperatur des mindestens einen Fahrzeugaggregates und/oder der Fahrgastzelle ermittelt. Zudem kann die Auswerte- und Steuereinheit Sensordaten empfangen und auswerten um die aktuelle Fahrzeuggeschwindigkeit zu ermitteln. In Abhängigkeit der ermittelten Daten kann die Auswerte- und Steuereinheit, den Antrieb 26 aktivieren und dadurch die Durchlassöffnungen 22,23 öffnen oder schließen.

Wie aus Fig. 4 und 5 weiter ersichtlich ist, weist der Grundkörper 21 erste Elemente 21.5 einer Rastverbindung 21.4 auf, welche mit karosserieseitig angeordneten zweiten Elementen 21.6 der Rastverbindung 21.4 zusammenwirken und den Grundkörper 21 an der Fahrzeugfront 1 festlegen. Im dargestellten Ausführungsbeispiel sind die ersten Rastelemente 21.5 als Aufnahmen und die zweiten Rastelemente 21.6 als Rastnasen ausgeführt.

Wie aus Fig. 1 bis 5 weiter ersichtlich ist, liegen das erste Stellelement 24 und das zweite Stellelement 25 in der ersten Stellung an der Fahrzeugfront 1 an und erzeugen einen geringen Luftwiderstand. Der geringe Luftwiderstand resultiert unter anderem aus einer geschlossenen flächigen Außenhaut des Fahrzeugs in der ersten Stellung.

### BEZUGSZEICHENLISTE

- 1: Fahrzeugfront
- 1.2: Außenbereich
- 1.4: Innenbereich
- 10: Stoßfänger
- 20: Vorrichtung zur Abstimmung eines Luftdurchsatzes
- 21: Grundkörper
- 21.2: Aufnahme
- 21.4: Rastverbindung
- 21.5: erste Elemente
- 21.6: zweite Elemente
- 22,23: Durchlassöffnung
- 24: erstes Stellelement (Klappe)
- 24.2: Kulissenführung
- 25: zweites Stellelement
- 25.2: Finne
- 26: Antrieb (Elektroantrieb)
- 27: Aktuator
- 28: erster Luftschacht
- 29: zweiter Luftschacht
- y: Fahrzeugquerrichtung
- z: Fahrzeughochrichtung

## Patentansprüche

1. Vorrichtung (20) zur Abstimmung eines Luftdurchsatzes mit einem Grundkörper (21) und mindestens zwei verschließbaren oder freigebbaren Durchlassöffnungen (22, 23), welche in einem Fahrzeugfrontbereich (1) angeordnet und mit jeweils einem korrespondierenden Luftschacht (28, 29) gekoppelt sind, wobei ein erstes Stellelement (24) als linear verschiebbare Klappe ausgeführt ist, welche in einer ersten Stellung die mindestens zwei Durchlassöffnungen (22, 23) verschließt, in einer zweiter Stellung eine erste Durchlassöffnung (22) freigibt und eine zweite Durchlassöffnung (23) verschließt und in einer dritten Stellung beide Durchlassöffnungen (22, 23) freigibt, **dadurch gekennzeichnet, dass** ein zweites Stellelement (25) eine Finne (25.2) ausbildet, wenn das erste Stellelement (24) in der zweiten oder dritten Position angeordnet ist, wobei die Finne (25.2) durch Falten und/oder Knicken des zweiten Stellelements (25) ausbildbar ist.

2. Vorrichtung nach Anspruch 1, **dadurch gekennzeichnet, dass** das erste Stellelement (24) in Fahrzeugquerrichtung (y) horizontal verschiebbar gelagert ist und die mindestens zwei Durchlassöffnungen (22, 23) in Fahrzeugquerrichtung (y) nebeneinander angeordnet sind.

3. Vorrichtung nach Anspruch 1 oder 2, **dadurch gekennzeichnet, dass** der Grundkörper (21) mindestens eine Kulissenführung (24.2) aufweist, welche das erste Stellelement (24) führt.

4. Vorrichtung nach Anspruch 3, **dadurch gekennzeichnet, dass** die mindestens eine Kulissenführung (24.2) zumindest teilweise hinter dem zweiten Stellelement (25) verläuft.

5. Vorrichtung nach einem der Ansprüche 1 bis 4, **dadurch gekennzeichnet, dass** der Grundköper (21) eine Aufnahme (21.2) für einen Antrieb (26) aufweist.

6. Vorrichtung nach Anspruch 5, **dadurch gekennzeichnet, dass** der Antrieb (26) mit dem ersten Stellelement (24) und/oder mit dem zweiten Stellelement (25) gekoppelt ist.

7. Vorrichtung nach einem der Ansprüche 1 bis 6, **dadurch gekennzeichnet, dass** der Grundkörper (21) erste Elemente (21.5) einer Rastverbindung (21.4) aufweist, welche mit karosserieseitig angeordneten zweiten Elementen (21.6) der Rastverbindung (21.4) zusammenwirken und den Grundkörper (21) an der Fahrzeugfront (1) festlegen.

8. Vorrichtung nach einem der Ansprüche 1 bis 7, **dadurch gekennzeichnet, dass** das erste Stellelement (24) und das zweite Stellelement (25) in der ersten Stellung an der Fahrzeugfront (1) anliegen und einen geringen Luftwiderstand erzeugen.

## Claims

1. Device (20) for matching an air flow to a main body (21) and at least two closable or releasable outlet openings (22, 23) which are arranged in a vehicle front region (1) and are coupled to a corresponding air shaft (28, 29) wherein a first actuating element (24) is configured as a linearly displaceable flap which closes the at least two outlet openings (22, 23) in a first position, releases a first outlet opening (22) in a second position and closes a second outlet opening (23) and releases both outlet openings (22, 23) in a third position, **characterised in that** a second actuating element (25) forms a fin (25.2) when the first actuating element (24) is arranged in the second or third position wherein the fin (25.2) can be formed by folding and/or bending the second actuating element (25).

2. Device according to claim 1, **characterised in that** the first actuating element (24) is mounted so as to be horizontally displaceable in the transverse direction of the vehicle (y) and the at least two outlet openings (22, 23) are arranged next to each other in the transverse direction of the vehicle (y).

3. Device according to claim 1 or 2, **characterised in that** the main body (21) has at least one sliding guide (24.2) which guides the first actuating element (24).

4. Device according to claim 3, **characterised in that** the at least one sliding guide (24.2) runs at least partially behind the second actuating element (25).

5. Device according to any one of claims 1 to 4, **characterised in that** the main body (21) has a receiving portion (21.2) for a drive (26).

6. Device according to claim 5, **characterised in that** the drive (26) is coupled to the first actuating element (24) and/or to the second actuating element (25).

7. Device according to any one of claims 1 to 6, **characterised in that** the main body (21) has first elements (21.5) of a latch connection (21.4) which cooperate with two elements (21.6) of the latch connection (21.4) arranged on the vehicle body-side and fix the main body (21) to the vehicle front (1).

8. Device according to any one of claims 1 to 7, **characterised in that** the first actuating element (24) and the second element (25) abut on the vehicle front (1) in the first position and produce less air resistance.

## Revendications

1. Dispositif (20) destiné à régler un débit d'air et comprenant un corps de base (21) et au moins deux ouvertures de passage (22, 23) pouvant être fermées ou ouvertes, lesquelles sont agencées dans une zone avant de véhicule (1) et sont couplées chacune à un puits d'air (28, 29) correspondant, dans lequel un premier élément de réglage (24) est réalisé sous la forme d'un volet qui est déplaçable de façon linéaire et qui, dans une première position, ferme les au moins deux ouvertures de passage (22, 23), dans une deuxième position, ouvre une première ouverture de passage (22) et ferme une deuxième ouverture de passage (23) et, dans une troisième position, ouvre les deux ouvertures de passage (22, 23), **caractérisé en ce qu'**un deuxième élément de réglage (25) forme un aileron (25.2) lorsque le premier élément de réglage (24) est placé dans la deuxième ou troisième position, l'aileron (25.2) pouvant être formé par pliage et/ou flambage du deuxième élément de réglage (25).

2. Dispositif selon la revendication 1, **caractérisé en ce que** le premier élément de réglage (24) est logé de manière à pouvoir être déplacé horizontalement dans la direction transversale de véhicule (y) et les au moins deux ouvertures de passage (22, 23) sont agencées l'une à côté de l'autre dans la direction transversale de véhicule (y).

3. Dispositif selon la revendication 1 ou 2, **caractérisé en ce que** le corps de base (21) comporte au moins un guide de coulisse (24.2) qui guide le premier élément de réglage (24).

4. Dispositif selon la revendication 3, **caractérisé en ce que** l'au moins un guide de coulisse (24.2) s'étend au moins en partie derrière le deuxième élément de réglage (25).

5. Dispositif selon l'une des revendications 1 à 4, **caractérisé en ce que** le corps de base (21) comporte un logement (21.2) pour un dispositif d'entraînement (26).

6. Dispositif selon la revendication 5, **caractérisé en ce que** le dispositif d'entraînement (26) est couplé au premier élément de réglage (24) et/ou au deuxième élément de réglage (25).

7. Dispositif selon l'une des revendications 1 à 6, **caractérisé en ce que** le corps de base (21) comporte des premiers éléments (21.5) d'un assemblage par encliquetage (21.4) qui coopèrent avec des deuxièmes éléments (21.6), agencés côté carrosserie, de l'assemblage par encliquetage (21.4) et qui fixent le corps de base (21) à l'avant de véhicule (1).

8. Dispositif selon l'une des revendications 1 à 7, **caractérisé en ce que** le premier élément de réglage (24) et le deuxième élément de réglage (25), dans la première position, s'appuient contre l'avant de véhicule (1) et produisent une petite résistance aérodynamique.
